# EUROPÄISCHE PATENTSCHRIFT

(11) **EP 3 706 543 B1**
(45) Veröffentlichungstag und Bekanntmachung des Hinweises auf die Patenterteilung: **21.06.2023**
(21) Anmeldenummer: 18799712.7
(22) Anmeldetag: 05.11.2018
(51) Int. Cl.: A01D 34/30, A01D 34/18

(54) **SCHNEIDWERK FÜR EINE LANDWIRTSCHAFTLICHE ERNTEMASCHINE**
CUTTERBAR FOR AN AGRICULTURAL HARVESTING MACHINE
BARRE DE COUPE POUR UNE RÉCOLTEUSE AGRICOLE

(30) Priorität: 07.11.2017 DE 202017106738 U
(43) Veröffentlichungstag der Anmeldung: 16.09.2020
(73) Patentinhaber: SMF - Holding GmbH, 57612 Eichelhardt (DE)
(72) Erfinder: SCHMIDT, Ralf, 57629 Mörsbach (DE); OTTO, Sascha, 57612 Racksen (DE)
(74) Vertreter: Neumann Müller Oberwalleney Patentanwälte PartG mbB
(86) Internationale Anmeldenummer: PCT/EP2018/080204
(87) Internationale Veröffentlichungsnummer: WO 2019/091927

(56) Entgegenhaltungen:
- CH-A- 259 041
- DE-A1- 2 123 369
- US-A- 5 157 906
- US-A1- 2009 145 264

## Beschreibung

Die Erfindung betrifft ein Schneidwerk für eine landwirtschaftliche Erntemaschine nach dem Oberbegriff des Anspruchs 1 mit einem Messer, das hin und her bewegt angetrieben ist.

Bekannte Mähmesserantriebe werden durch unterschiedlichste Bauarten realisiert. Hierbei werden Getriebeanordnungen eingesetzt, die eine Drehbewegung in eine hin und her gehende Bewegung umwandeln und mit einem Messerkopf des Messers verbunden sind, um dieses oszillierend anzutreiben.

US 5 157 906 A zeigt ein Schneidwerk der eingangs genannten Art mit einer Antriebsanordnung, die einen Antrieb mit einer rotierenden Scheibe und einem hin- und hergehenden Messer aufweist. Zur Bewegungsumwandung der Drehbewegung der Scheibe auf eine hin- und hergehende Bewegung des Messers ist ein Riemen exzentrisch zu einer Drehachse der Scheibe mit einem gegenüber der Scheibe drehbar gelagerten Koppelelement verbunden. Die kreisförmige Bewegung des Koppelelements führt zu einer Hin- und herbewegung des Riemens. Der Riemen ist ausgangsseitig mit dem Messer verbunden, der somit hin- und hergehend angetrieben wird.

DE 2 123 369 A zeigt eine Vorrichtung zum Mähen von Getreide mittels eines Mähbalkens mit mehreren Mähmesser, die durch Rotation einer parallel zum Mähbalken verlaufenden Antriebswelle in schwenkende Bewegungen versetzt werden und mit feststehenden Gegenmessern zusammenwirken. Die Messer sind an Außenringen von schräg zu einer Achse der Antriebswelle angeordneten Kugellagern befestigt, deren Innenringe auf der Antriebswelle drehfest befestigt sind. Die Antriebswelle treib die Messer derart an, dass auf diese über die in Bezug auf die Drehbewegung der Antriebswelle feststehenden Außenringe ein Drehmoment ausgeübt wird, welches die Messer gegen das Gegenmesser andrückt. Die Messer führen zusammen mit den zugehörigen Außenringen eine Taumelbewegung aus, wobei die Messer an dem Gegenmesser angedrückt bleiben.

CH 259041 A zeigt eine Getriebeanordnung für ein Schneidwerk, die einen Hebel aufweist, der um eine Schwenkachse schwenkbar gelagert ist. Ausgehend von der Schwenkachse bildet der Hebel einen ersten Hebelarm, über den der Hebel hin- und her bewegt angetrieben wird, und einen zweiten Hebelarm, an dessen Ende das Mähmesser befestigt ist. Der erste Hebelarm ist hierbei kürzer als der zweite Hebelarm, sodass eine kleinere Antriebsbewegung in eine größere Hubbewegung des Mähmessers umgesetzt wird.

DE 37 11 265 A1 beschreibt einen Antrieb für ein Doppelmesser eines Mähbalkens mit je einem ein Ober- und Untermesser antreibenden, um eine vertikal angeordnete Schwingwelle schwenkbar gelagerten Schwinghebel. Die Schwinghebel werden von einem Kurbeltrieb, einem Antriebshebel, der die Kurbelbewegung des Kurbeltriebs in eine Schwingbewegung transformiert, sowie Antriebsmitteln, die die beiden Schwinghebel verbindenden, gegenläufig angetrieben. Jede Schwingwelle weist als Antriebsmittel je ein Zahnsegment auf, wobei die Zahnsegmente gegenseitig ineinandergreifen.

Die US 6 273 214 B1 zeigt eine Winkelgetriebeanordnung zum Antreiben eines Mähmessers. Hierbei ist eine erste Getriebeeinheit vorgesehen, die eine rotatorische Bewegung in eine translatorische Bewegung zum Antreiben des Mähmessers umwandelt. Ferner ist eine zweite Getriebeeinheit in Form eines Winkelgetriebes vorgesehen. Die zweite Getriebeeinheit dient der Drehrichtungsänderung, da die Antriebseinheit von einem entfernt angeordneten Motor über einen Riementrieb und eine Riemenscheibe angetrieben wird. Hierbei muss die Rotation der Riemenscheibe, die sich um eine horizontale Achse dreht, umgelenkt werden in eine Rotationsbewegung um eine vertikale Achse.

Ferner gibt es Antriebskonzepte, bei denen ein umlaufender rotierender Antrieb über eine Koppelstange mit dem Mähmesser antriebsverbunden ist, wobei die Koppelstange mit dem Mähmesser über ein Drehlager oder Taumellager verbunden ist, wodurch die Drehbewegung des Antriebs in eine hin und her gehenden Bewegung des Mähmessers übertragen wird.

Bei allen bisher bekannten Antriebskonzepten ist ein maximaler Hub des Mähmessers durch den Bauraum für den Antrieb begrenzt. Immer kürzere Erntezyklen und leistungsstärkere Erntemaschinen verlangen nach höherem Durchsatz, der zum Beispiel durch eine Erhöhung der Fahrgeschwindigkeit erzielt werden kann, um Effizienzsteigerung der Dreschorgane und der gesamten Erntemaschine unter anderem auch in Gebieten mit geringen Bestandsdichten zu gewährleisten.

Hierdurch ergibt sich der Bedarf nach einem höheren Durchsatz am Schneidsystem. Schneidwerke sehen hierbei in der Regel vor, dass bei einer Hinbewegung bzw. bei einer Rückbewegung je Messerklinge des Messers ein Schnitt durchgeführt wird. Eine Erhöhung des Durchsatzes am Schneidwerk wäre daher durch eine Erhöhung der Drehzahl des Antriebs möglich, um hiermit die Schnittgeschwindigkeit zu erhöhen. Dies führt jedoch zu einer erhöhten Belastung, insbesondere beim Durchlaufen der Wendepunkte der Hin- und Herbewegung, die eine Verstärkung und damit eine Erhöhung des Gewichts der Antriebsbauteile erfordert.

Aufgabe der vorliegenden Erfindung ist es daher, ein Schneidwerk bereitzustellen, das einen höheren Durchsatz gewährleistet, ohne dass damit eine wesentliche Erhöhung des Gewichts der Antriebsbauteile einhergeht.

Die Erfindung wird mit einem Schneidwerk für eine landwirtschaftliche Erntemaschine gemäß Anspruch 1 gelöst. Beispielhafte Ausführungsformen ergeben sich aus den abhängigen Ansprüchen.

Bei dem erfindungsbemäßen Schneidwerk kann bei gleicher Drehzahl pro Hubweg die Anzahl der Schnitte vergrößert werden. Wo heutzutage üblicherweise ein Schnitt pro Hub vollzogen wird, können dann zwei oder mehr Schnitte vollzogen werden. Bei einem heutzutage weit verbreiteten Messerhub von 80 mm kann dieser zum Beispiel auf 160 mm erhöht werden, also verdoppelt werden. Somit lässt sich auch die Anzahl der Schnitte pro Hub verdoppeln.

Hierzu ist die Getriebeanordnung eine Zugmittelgetriebeanordnung, wobei das Eingangselement ein Zugmittel, zum Beispiel eines Eingangszugmitteltriebs der Zugmittelgetriebeanordnung, ist.

Die Getriebeanordnung kann hierbei eine Antriebsscheibe aufweisen, die von dem Eingangszugmittel angetrieben ist. Ferner kann die Getriebeanordnung eine koaxial mit der Antriebsscheibe verbundene Abtriebsscheibe aufweisen, die ein Abtriebszugmittel antreibt, wobei die Antriebsscheibe einen geringeren Durchmesser aufweist als die Abtriebsscheibe. Somit ist ein einfacher Aufbau zur Erhöhung des Hubs gewährleistet.

Alternativ kann die Getriebeanordnung ein Übersetzungselement aufweisen, das um eine Schwenkachse schwenkbar bzw. begrenzt hin und her drehbar ist. Hierbei kann das Übersetzungselement mit dem Eingangselement gekoppelt sein. Ferner kann das Übersetzungselement mit einem Ausgangselement gekoppelt sein, das mit dem Messer antriebsverbunden ist, wobei das Eingangselement in einem geringeren Abstand zur Schwenkachse mit dem Übersetzungselement gekoppelt ist als das Ausgangselement.

Das Übersetzungselement kann alternativ eine Riemenscheibe sein, wobei in einer Ausgestaltung das Ausgangselement ein Riemen sein kann.

Die Gegenschneiden können durch Mähfinger gebildet sein, wobei die Mähfinger in demselben Abstand, zum Beispiel 3 Inch (entspricht 76,2 Millimeter), zueinander angeordnet sind, wie die Schneiden des Messers. Es sind auch andere Schnittsysteme, wie 4-lnch-Schnittsysteme (mit einem Mähfingerabstand von 101,6 Millimeter) oder andere Abstände denkbar.

Die Erfindung wird anhand der folgenden Zeichnungen näher erläutert. Hierin zeigen:
- Figur 1: eine erste Ausführungsform eines erfindungsgemäßen Schneidwerks mit einer Zugmittelgetriebeanordnung als Getriebeanordnung,
- Figur 2: eine zweite Ausführungsform eines erfindungsgemäßen Schneidwerks mit einer alternativen Zugmittelgetriebeanordnung und
- Figur 3: eine Draufsicht eines Schneidwerks gemäß einer beliebigen Ausführungsform gemäß den Figuren 1 und 2.

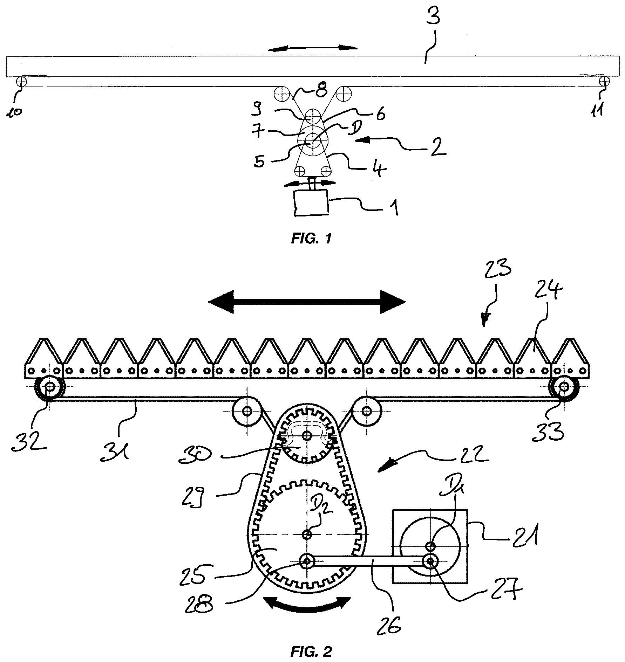

Die erste Ausführungsform gemäß Figur 1 zeigt einen Antrieb 1, eine Getriebeanordnung 2 in Form einer Zugmittelgetriebeanordnung und ein Messer 3 in Form eines Mähmessers. Das Messer 3 ist lediglich schematisch dargestellt, ohne dass Messerklingen zu erkennen sind.

Der Antrieb 1 ist in dem vorliegenden Beispiel mit einem Eingangselement in Form eines Eingangszugmittels 4 antriebsverbunden, wobei der Antrieb 1 das Eingangszugmittel 4 oszillierend in einer Hin- und Herbewegung antreibt, wie dies durch den Doppelpfeil am Antrieb 1 angedeutet ist.

Das Eingangszugmittel 4 umschlingt eine Antriebsscheibe 5 und treibt diese an. Die Antriebsscheibe 5 ist um eine Drehachse D drehbar gelagert. Die Antriebsscheibe 5 ist ferner mit einer Abtriebsscheibe 7 verbunden, wobei die Abtriebsscheibe 7 koaxial zur Drehachse D angeordnet ist und fest mit der Antriebsscheibe 5 verbunden ist, so dass diese zusammen mit der Antriebsscheibe 5 gedreht wird bzw. von dem Eingangszugmittel 4 oszillierend drehend angetrieben wird.

Das in Figur 1 dargestellte Schneidwerk umfasst ferner ein Abtriebszugmittel 6, welches die Abtriebsscheibe 7 umschlingt und mit einer Zwischenscheibe 9 gekoppelt ist. Über die Zwischenscheibe 9 ist ein Koppelzugmittel 8 als Ausgangselement der Getriebeanordnung 2 antriebsverbunden, wobei das Koppelzugmittel 8 an zwei voneinander abgewandten Enden des Messers 3 über Umlenkscheiben 10, 11 an dem Messer 3 befestigt ist. Das Messer 3 wird somit gemäß dem am Messer 3 dargestellten Doppelpfeil hin und her bewegt angetrieben.

Der Durchmesser der Abtriebsscheibe 7 ist größer als der Durchmesser der Antriebsscheibe 5. Somit wird der Weg (Eingangsweg), den das Eingangszugmittel 4 vom Antrieb 1 hin und her bewegt wird, in einen größeren Ausgangsweg übersetzt, den das Abtriebszugmittel 6 und damit das Messer 3 linear hin und her bewegt wird. Der Ausgangsweg des Abtriebszugmittels 6 ist hierbei genauso groß, wie der Hin- und Herweg des Koppelzugmittels 8, so dass das Messer 3 ebenfalls über eine Strecke hin und her bewegt wird, die der Länge des Ausgangswegs entspricht.

Figur 2 zeigt eine zweite Ausführungsform eines erfindungsgemäßen Schneidwerks mit einer Getriebeanordnung 22 in Form einer Zugmittelgetriebeanordnung. Die zweite Ausführungsform weist einen Antrieb 21, die Getriebeanordnung 22 und ein Messer 23 auf, wobei das Messer 23 mit einer Vielzahl von Messerklingen 24 versehen ist.

Der Antrieb 21 ist über eine Koppelstange 26 mit einem Übersetzungselement in Form einer Zahnriemenscheibe 25 antriebsverbunden. Die Koppelstange 26 ist über einen Gelenkpunkt 27 mit dem Antrieb 21 verbunden, wobei der Gelenkpunkt 27 rotierend um eine erste Drehachse D1 angetrieben ist.

Die Koppelstange 26 ist über ein Eingangselement 28 der Zahnriemenscheibe 25 mit dieser verbunden, wobei die Zahnriemenscheibe 25 oszillieren hin und her bewegt um eine zweite Drehachse D2 angetrieben ist, wie dies durch den bogenförmigen Doppelpfeil angedeutet ist. Bei dem Eingangselement 28 kann es sich um ein Drehlager handeln.

Die Zahnriemenscheibe 25 ist von einem Zahnriemen 29 umschlungen, der ebenfalls eine Zwischenscheibe 30 umschlingt. Hierbei ist der Außendurchmesser der Zahnriemenscheibe 25, welcher vom Zahnriemen 29 umschlungen wird, größer als der Durchmesser, auf dem sich das Eingangselement 28 befindet. Somit ist gewährleistet, dass die Länge des Eingangsweges, den das Eingangselement 28 bei seiner Hin- und Herbewegung bewegt wird, kleiner ist als die Länge des Weges, den der Zahnriemen 29 hin und her bewegt wird.

Die Hin- und Herbewegung des Zahnriemens 29 wird über die Zwischenscheibe 30 auf einen Koppelriemen 31 übertragen, welcher in etwa denselben Hin- und Herweg vollzieht, wie der Zahnriemen 29, so dass der Hin- und Herweg des Koppelriemens 31 ebenfalls größer ist als der Hin- und Herweg (Eingangsweg) des Eingangselements 28.

Der Koppelriemen 31 ist analog zu der ersten Ausführungsform über Umlenkscheiben 32, 33 an abgewandten Enden des Messers 30 befestigt, so dass das Messer 30 ebenfalls linear hin und her bewegt angetrieben ist, wobei die Länge des Ausgangswegs, den das Messer 23 hin und her bewegt wird, der Länge des Wegs des Koppelriemens 31 entspricht. Somit wird ebenfalls die Hin- und Herbewegung des Eingangselements 28 derart übersetzt, dass die Länge des Ausgangswegs des Messers 23 größer ist.

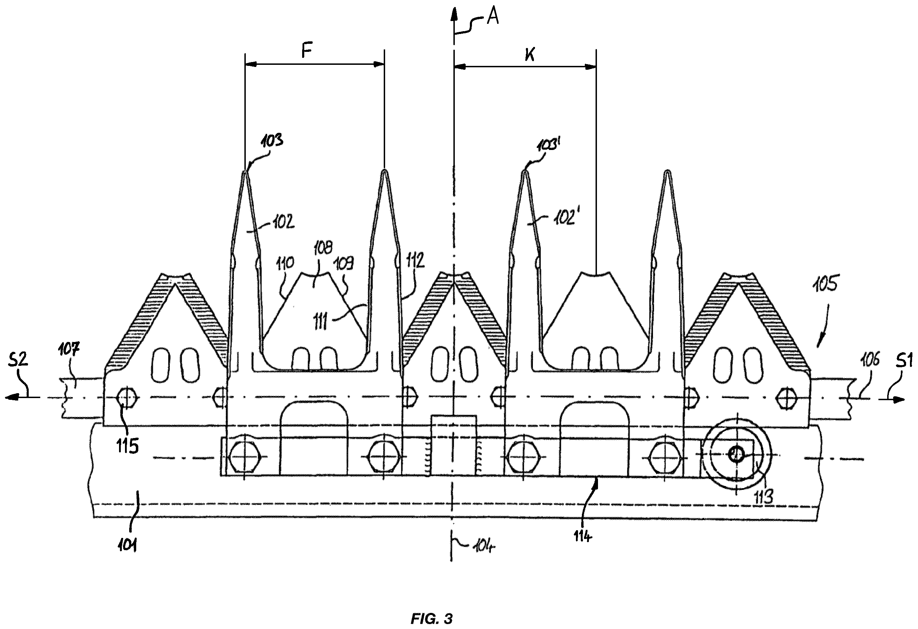

Figur 3 zeigt einen Mähbalken eines Schneidwerks mit einem Fingerbalken 101, der an einer landwirtschaftlichen Erntemaschine befestigbar ist. An diesem sind Mähfinger 102, 102' angeordnet, die mit freien Enden 103, 103' in einer Arbeitsrichtung A der Landmaschine zeigen und parallel zu einer Längsachse 104 angeordnet sind. Ein Messer 105 ist entlang einer Querachse 106, welche im rechten Winkel zur Längsachse 104 verläuft, oszillierend bewegbar zum Fingerbalken 101 geführt. Das Messer 105 umfasst eine Messerschiene 107 sowie mehrere mit dieser verbundene Messerklingen 108.

Die Messerklingen 108 bilden jeweils eine erste Schneide 109 und eine zweite Schneide 110. Die ersten Schneiden 109 wirken jeweils zumindest mit einer ersten Gegenschneide 111 eines Mähfingers 102 zusammen, wenn das Messer 105 in einer ersten Schnittrichtung S1 parallel zur Querachse 106 relativ zu den ersten Gegenschneiden 111 bzw. den Mähfingern 102, 102' bewegt wird. Ebenso arbeiten die zweiten Schneiden 110 jeweils mit zumindest einer zweiten Gegenschneide 112 der Mähfinger 102 zusammen, wenn das Messer 105 in einer zweiten Schnittrichtung S2 parallel zur Querachse 106 relativ zu den zweiten Gegenschneiden 112 bzw. den Mähfingern 102, 102' bewegt wird. Die ersten Schneiden 109 und die ersten Gegenschneiden 111 sowie die zweiten Schneiden 110 und die zweiten Gegenschneiden 112 sind jeweils winklig zueinander angeordnet und bilden einen Winkel, der in Arbeitsrichtung A betrachtet nach vorne geöffnet ist. Somit ergibt sich bei der oszillierenden Bewegung des Messers 105 eine Schnittbewegung vergleichbar zu der einer Schere, so dass Schnittkräfte in Richtung der Längsachse 104 entgegen der Arbeitsrichtung A entstehen. Zum Abstützen der Schnittkräfte ist das Messer 105 in dem gezeigten Ausführungsbeispiel über Rollen 113 gegen die Messerschiene 107 abgestützt. Die Rollen 113 sind jeweils über Rollenhalter 114 am Fingerbalken 101 befestigt. Das Messer 105 kann grundsätzlich auch ohne Rollen gegen die Messerschiene 107 abgestützt sein.

Aus Stabilitätsgründen sind jeweils zwei Mähfinger 102 aus einem Bauteil gefertigt sein und somit einen Doppelfinger gebildet, welcher in Draufsicht U-förmig gestaltet ist.

Die Messerklingen 108 sind über Schrauben 115 an der Messerschiene 107 befestigt.

Der Abstand F zwischen zwei benachbarten Mähfingern 102, 102' ist bei allen Mähfingern 102, 102' gleich. Dies Abstand F entspricht auch dem Abstand der ersten Gegenschneiden 111 bzw. dem Abstand der zweiten Gegenschneiden 111 zweier benachbarter Mähfinger 102, 102' zueinander. Der Abstand K zwischen zwei benachbarten Messerklingen 108 ist ebenfalls bei allen Messerklingen 108 gleich und ist identisch zum Abstand F zwischen zwei benachbarten Mähfingern 102, 102'. Dies Abstand K entspricht auch dem Abstand der ersten Schneiden 109 bzw. dem Abstand der zweiten Schneiden 110 zweier benachbarter Messerklingen 108 zueinander.

Der Antrieb für das Messer 105 ist derart ausgelegt, dass das Messer 105 in beiden Schnittrichtungen S1, S2 einen Hub von zumindest dem zweifachen Abstand F zwischen zwei benachbarten Mähfingern 102, 102' bzw. dem zweifachen Abstand K zwischen zwei benachbarten Messerklingen 108 ausführt. Somit passieren die ersten Schneiden 109 des Messers 105 bei einer Bewegung in der ersten Schnittrichtung S1 entlang des gesamten Hubes jeweils zumindest zwei erste Gegenschneiden 111. Die zweiten Schneiden 110 des Messers 105 passieren bei einer Bewegung in der zweiten Schnittrichtung S2 entlang des gesamten Hubes jeweils zumindest zwei zweite Gegenschneiden 112. Somit vollzieht das Messer 105 sowohl in der ersten Schnittrichtung S1 als auch in der zweiten Schnittrichtung S2 zumindest zwei vollständige Schnitte.

### Bezugszeichenliste

- 1: Antrieb
- 2: Getriebeanordnung
- 3: Messer
- 4: Eingangszugmittel (Eingangselement)
- 5: Antriebsscheibe
- 6: Abtriebszugmittel
- 7: Abtriebsscheibe
- 8: Koppelzugmittel (Ausgangselement)
- 9: Zwischenscheibe
- 10: Umlenkscheibe
- 11: Umlenkscheibe

- 21: Antrieb
- 22: Getriebeanordnung
- 23: Messer
- 24: Messerklinge
- 25: Zahnriemenscheibe
- 26: Koppelstange
- 27: Gelenkpunkt
- 28: Eingangselement
- 29: Zahnriemen
- 30: Zwischenscheibe
- 31: Koppelriemen (Ausgangselement)
- 32: Umlenkscheibe
- 33: Umlenkscheibe

- 101: Fingerbalken
- 102, 102': Mähfinger
- 103, 103': freies Ende
- 104: Längsachse
- 105: Messer
- 106: Querachse
- 107: Messerschiene
- 108: Messerklinge
- 109: erste Schneide
- 110: zweite Schneide
- 111: erste Gegenschneide
- 112: zweite Gegenschneide
- 113: Rolle
- 114: Rollenhalter
- 115: Schraube

- A: Arbeitsrichtung
- D: Drehachse
- D1: erste Drehachse
- D2: zweite Drehachse
- S1: erste Schnittrichtung
- S2: zweite Schnittrichtung

## Patentansprüche

1. Schneidwerk für eine landwirtschaftliche Erntemaschine umfassend:
einen Antrieb (1, 21),
eine Getriebeanordnung (2, 22), die ein Eingangselement (4, 28) aufweist, das mit dem Antrieb (1, 21) antriebsverbunden ist und von diesem entlang eines Eingangswegs hin und her bewegt angetrieben ist, wobei die Getriebeanordnung (2, 22) eine Zugmittelgetriebeanordnung und das Eingangselement (4, 28) ein Zugmittel ist, und
ein Messer (3, 23, 105) mit einer Vielzahl von Schneiden (109, 110), wobei das Messer (3, 23, 105) mit einem Ausgangselement (8, 31,) der Getriebeanordnung (2, 22,) antriebsverbunden ist und von diesem entlang eines Ausgangswegs, der länger ist als der Eingangsweg, linear hin und her bewegt angetrieben ist,
**dadurch gekennzeichnet,**
**dass** die Schneiden (109, 110) des Messers (3, 23, 105) bei einer Bewegung in einer Richtung (S1, S2) entlang des gesamten Ausgangswegs jeweils zumindest zwei Gegenschneiden (111, 112) des Schneidwerks passieren.

2. Schneidwerk nach Anspruch 1,
**dadurch gekennzeichnet,**
**dass** die Getriebeanordnung (2) eine Antriebsscheibe (5), die von dem Eingangszugmittel (4) angetrieben ist, und eine koaxial mit der Antriebsscheibe (5) verbundene Abtriebsscheibe (7) umfasst, die ein Abtriebszugmittel (6) antreibt, wobei die Antriebsscheibe (5) einen geringeren Durchmesser aufweist als die Abtriebsscheibe (7).

3. Schneidwerk nach Anspruch 1,
**dadurch gekennzeichnet,**
**dass** die Getriebeanordnung (22) ein Übersetzungselement (25) aufweist, das um eine Schwenkachse (D2) schwenkbar ist,
**dass** das Übersetzungselement (25) mit dem Eingangselement (28) gekoppelt ist, und
**dass** das Übersetzungselement (25) mit einem Ausgangselement (31) antriebsverbunden ist, das mit dem Messer (23) antriebsverbunden ist, wobei das Eingangselement (28) in einem geringeren Abstand zur Schwenkachse (D2) mit dem Übersetzungselement (25) gekoppelt ist als das Ausgangselement (31).

4. Schneidwerk nach Anspruch 3,
**dadurch gekennzeichnet,**
**dass** das Übersetzungselement eine Riemenscheibe (25) ist.

5. Schneidwerk nach einem der Ansprüche 1 bis 4,
**dadurch gekennzeichnet,**
**dass** die Gegenschneiden (111, 112) durch Mähfinger (102, 102') gebildet sind, die in demselben Abstand (F, K) zueinander angeordnet sind, wie die Schneiden (109, 110) des Messers (3, 23, 105).

6. Schneidwerk nach Anspruch 5,
**dadurch gekennzeichnet,**
**dass** die Mähfinger (102, 102') jeweils 3 Inch (76,2 Millimeter) von einem benachbarten Mähfinger (102, 102') beabstandet sind.

## Claims

1. Cutting device for an agricultural harvesting machine comprising:
a drive (1, 21),
a transmission arrangement (2, 22) having an input element (4, 28) drivingly connected to said drive (1, 21) and driven reciprocatingly by said drive along an input travel, the transmission arrangement (2, 22) being a traction drive arrangement and the input element (4, 28) being a traction means, and
a knife (3, 23, 105) having a plurality of cutting edges (109, 110), said knife (3, 23, 105) being drivingly connected to an output element (8, 31,) of the transmission arrangement (2, 22,) and driven thereby in a linearly reciprocating manner along an output travel that is longer than the input travel,
**characterized in**
**that** the cutting edges (109, 110) of the knife (3, 23, 105) each pass at least two counter-cutting edges (111, 112) of the cutting device during a movement in one direction (S1, S2) along the entire output travel.

2. Cutting device according to claim 1,
**characterized in**
**that** the transmission arrangement (2) comprises an drive pulley (5), which is driven by the input traction means (4), and an output pulley (7), which is coaxially connected to the drive pulley (5) and drives an output traction means (6), wherein the drive pulley (5) has a smaller diameter than the output pulley (7).

3. Cutting device according to claim 1,
**characterized in**
**that** the transmission arrangement (22) has a transmission element (25) which can be pivoted about a pivot axis (D2),
**that** the transmission element (25) is coupled to the input element (28), and that the transmission element (25) is drivingly connected to an output element (31) which is drivingly connected to the knife (23),
wherein the input element (28) is coupled to the translation element (25) at a smaller distance from the pivot axis (D2) than the output element (31).

4. Cutting device according to claim 3,
**characterized in**
**that** the transmission element is a belt pulley (25).

5. Cutting device according to one of the claims 1 to 4,
**characterized in**
**that** the counter-cutting edges (111, 112) are formed by mowing fingers (102, 102') which are arranged at the same distance (F, K) from one another as the cutting edges (109, 110) of the knife (3, 23, 105).

6. Cutting device according to claim 5,
**characterized in**
**that** the mowing fingers (102, 102') are each 3 inches apart (76.2 millimeters) from an adjacent mowing finger (102, 102').

## Revendications

1. Barre de coupe pour une récolteuse agricole comprenant :
un système d'entraînement (1, 21),
un agencement de transmission (2, 22), qui comporte un élément d'entrée (4, 28), qui est relié en entraînement au système d'entraînement (1, 21) et est entraîné par celui-ci le long d'une course d'entrée en un mouvement de va-et-vient, sachant que l'agencement de transmission (2, 22) est un agencement de transmission à moyen de traction et l'élément d'entrée (4, 28) un moyen de traction, et
un couteau (3, 23, 105) avec une pluralité de tranchants (109, 110), sachant que le couteau (3, 23, 105) est relié en entraînement à un élément de sortie (8, 31) de l'agencement de transmission (2, 22) et est entraîné par celui-ci en un mouvement de va-et-vient linéaire, le long d'une course de sortie, qui est plus longue que la course d'entrée,
**caractérisée en ce que**
les tranchants (109, 110) du couteau (3, 23, 105) passent lors d'un mouvement dans une direction (S1, S2) le long de toute la course de sortie respectivement par au moins deux contre-tranchants (111, 112) de la barre de coupe.

2. Barre de coupe selon la revendication 1,
**caractérisée en ce que**
l'agencement de transmission (2) comprend une poulie de transmission (5), qui est entraînée par le moyen de traction d'entrée (4) et comprend une poulie réceptrice (7) coaxialement reliée à la poulie de transmission (5), qui entraîne un moyen de traction récepteur (6), sachant que la poulie de transmission (5) comporte un diamètre plus faible que la poulie réceptrice (7).

3. Barre de coupe selon la revendication 1,
**caractérisée en ce que**
l'agencement de transmission (22) comporte un élément de démultiplication (25), qui peut pivoter autour d'un axe de pivotement (D2),
**en ce que** l'élément de démultiplication (25) est couplé à l'élément d'entrée (28), et
**en ce que** l'élément de démultiplication (25) est relié en entraînement à un élément de sortie (31), qui est relié en entraînement au couteau (23),
sachant que l'élément d'entrée (28) est couplé à l'élément de démultiplication (25) à une distance plus faible de l'axe de pivotement (D2) que l'élément de sortie (31).

4. Barre de coupe selon la revendication 3,
**caractérisée en ce que**
l'élément de démultiplication est une poulie à courroie (25) .

5. Barre de coupe selon l'une quelconque des revendications 1 à 4,
**caractérisée en ce que**
les contre-tranchants (111, 112) sont formés par des doigts de coupe (102, 102'), qui sont disposés à la même distance (F, K) les uns des autres, comme les tranchants (109, 110) du couteau (3, 23, 105).

6. Barre de coupe selon la revendication 5,
**caractérisée en ce que**
les doigts de coupe (102, 102') sont respectivement à distance de 3 pouces (76,2 millimètres) d'un doigt de coupe voisin (102, 102').
